Europäisches Patentamt

European Patent Office

Office européen des brevets

(11) Numéro de publication : **0 308 329 B1**

(12) **FASCICULE DE BREVET EUROPEEN**

(45) Date de publication du fascicule du brevet :
**03.06.92 Bulletin 92/23**

(51) Int. Cl.$^5$ : **A23K 1/18,** A23K 1/16,
A01K 67/00

(21) Numéro de dépôt : **88402321.9**

(22) Date de dépôt : **15.09.88**

(54) **Utilisation d'aliments contenant du lithothamne pour l'élevage des escargots.**

(30) Priorité : **18.09.87 FR 8712940**

(43) Date de publication de la demande :
**22.03.89 Bulletin 89/12**

(45) Mention de la délivrance du brevet :
**03.06.92 Bulletin 92/23**

(84) Etats contractants désignés :
**AT BE CH DE ES FR GB GR IT LI LU NL SE**

(56) Documents cités :
**WO-A-84/04871**
**DE-A- 1 607 169**
**FR-A- 2 068 865**
**CHEMICAL ABSTRACTS, vol. 100, no. 25, 18**
**juin 1984, page 341, résumé no. 206738p,**
**Columbus, Ohio, US; A.N.C. MORSE et**
**al.:"Recruitement and metamorphosis of**
**Haliotis larvae induced by molecules uniquely**
**available at the surfaces of crustose red**
**algae",& J. EXP. MAR. BIOL. ECOL. 1984,**
**75(3), 191-215**

(56) Documents cités :
**ECONOMIC BOTANY, vol. 29, no. 2, avril-juin**
**1975, pages 141-145; G. BLUNDEN et al.:**
**"Commercial collection and utilisation**
**ofmaerl"**
**THE JOURNAL OF EXPERIMENTAL ZOO-**
**LOGY, vol. 120, 1952, pages 311-342, Amster-**
**dam, NL; L.E. WAGGE: "Quantitative studies**
**ofcalcium metabolism in Helix aspersa"**
**PROCEEDINGS OF THE MALACOLOGICAL**
**SOCIETY, vol. 40, 1973, pages 491-503, Lon-**
**dres, GB; H.H. CROWELL: "Laboratory study**
**ofcalcium requirements of the brown garden**
**snail, Helix aspersa Müller"**

(73) Titulaire : **CENTRE NATIONAL DE LA**
**RECHERCHE SCIENTIFIQUE**
**15, quai Anatole France**
**F-75007 Paris (FR)**

(72) Inventeur : **Gomot, Annette**
**Rue de Bassand**
**F-25770 Franois (FR)**
Inventeur : **Gomot, Lucien**
**Rue de Bassand**
**F-25770 Franois (FR)**

(74) Mandataire : **Ores, Irène et al**
**CABINET ORES 6, Avenue de Messine**
**F-75008 Paris (FR)**

Jouve, 18, rue Saint-Denis, 75001 PARIS

## Description

La présente invention est relative à l'utilisation de compositions alimentaires pour escargots, propres à assurer une croissance rapide des animaux concernés.

Certains milieux économiques et industriels manifestent un intérêt croissant pour l'héliciculture, c'est-à-dire pour l'élevage industriel des escargots, en raison d'une part du développement de la consommation d'escargots, non seulement en France mais dans de nombreux autres pays, d'autre part du développement des techniques de conservation tant traditionnelles que par surgélation appliquées aux escargots, qui permet d'étendre dans le temps et dans l'espace le domaine de consommation des escargots, d'une troisième part de la volonté d'obtenir, en mettant en oeuvre des techniques d'élevage bien définies, des escargots présentant une qualité et un poids homogènes, et d'une quatrième part de la volonté de créer à proximité des conserveries possédant les technologies de conservation adaptées à la conservation des escargots, des élevages d'escargots capables de fournir à ces conserveries des rendements en animaux d'élevage élevés du point de vue quantitatif, assurant à ces élevages une rentabilité économique compatible avec un fonctionnement bénéficiaire.

L'alimentation étant un élément essentiel du prix de revient des élevages, c'est sur la mise au point d'aliments propres à assurer un indice de consommation I.C. $= \dfrac{\text{Quantité d'aliment consommé (kg)}}{\text{gain de poids (kg)}}$ satisfaisant, qu'ont porté les efforts des chercheurs et des industriels spécialisés dans le développement d'aliments pour animaux d'élevage.

Les premières tentatives d'élevage d'escargots utilisaient une alimentation composée de végétaux respectant la phytophagie de ces animaux. Cependant, l'emploi d'une telle nourriture présente de nombreux inconvénients (distribution difficile, nettoyage automatique inefficace, etc...) surtout dans les élevages à grande échelle qui se développent actuellement dans le cadre de l'héliciculture.

Pour pallier les inconvénients constatés avec l'alimentation végétale traditionnelle adaptée à la phytophagie des animaux, des industriels spécialistes des aliments pour animaux ont proposé des aliments composés contenant des céréales et des tourteaux pulvérisés, ainsi que des sels minéraux, des vitamines et une teneur équilibrée en amino-acides et en oligo-éléments.

Les compositions des aliments pour escargots du commerce comprennent sensiblement les composants suivants :

| | | |
|---|---|---|
| Matières minérales | 10 – | 40 % |
| dont    Ca | 3 – | 18 % |
| P | 0,5 – | 7 % |
| ClNa | 0 – | 2 % |
| Insoluble chlorhydrique | 0 – | 5 % |
| Humidité | 5 – | 7,5 % |
| Cendres brutes | 24 – | 44 % |
| Cellulose brute | 2 – | 20,5 % |
| Protéines brutes | 6 – | 20 % |
| Matières grasses brutes | 1 – | 35 % |
| Glucides hydrolysables | 9 – | 31,5 % |
| Amino-Acides | 10 – | 17,5 % |

Vitamines :

| | | |
|---|---|---|
| Vitamines A | 400000 – | 500000 U.I./100 kg |
| Vitamine $D_3$ | 90000 – | 120000 U.I./100 kg |
| Vitamine $B_1$ | env. 375 – | 500 mg/100 kg |
| Vitamine E | env. 500 – | 1100 mg/100 kg |
| Vitamine K | 50 – | 70 mg/100 kg |

EP 0 308 329 B1

Les aliments composés proposés dans l'Art antérieur, qui se rangent dans la catégorie des "composés minéraux vitaminés" en raison de leur teneur élevée en matières minérales et de la présence de vitamines dans leur composition, sont d'un emploi très facile et donnent un indice de consommation de l'ordre de 0,9 à 1,3 kg, alors que cet indice est de 4,8 kg pour des animaux nourris avec du chou cavalier.

Alors que les escargots nourris à l'aide de végétaux, aussi bien à l'état "sauvage" que dans des élevages non-chauffés deviennent adultes ("bordés") en 10 à 24 mois, il a été constaté que les escargots nourris avec les aliments composés proposés dans l'Art antérieur parviennent à l'âge adulte au bout de 5 à 6 mois, ce qui représente une accélération de croissance de 2 à 3.

Il s'est cependant avéré qu'avec cette alimentation composée, à base de farines, la coquille des escargots est fragile, ce qui représente un inconvénient important, d'une part au cours de la croissance qui peut ête stoppée si la coquille se casse, par exemple à l'occasion d'une chute, d'autre part lors de la commercialisation, celle-ci incluant généralement les coquilles. Les tentatives d'amélioration de la qualité de la coquille par ajout de carbonate de calcium et/ou d'hydroxy-carbonate de magnésium ont en partie remédié à cet inconvénient. Toutefois, de tels ajouts n'ont aucune incidence sur la croissance, sur laquelle ils n'ont aucun effet accélérateur.

La présente invention s'est en conséquence donné pour but d'utiliser un aliment composé pour des des escargots, dont l'un des composants contribue de manière considérable à la fois à une accélération importante de la croissance des animaux qui sont nourris avec ledit aliment, et à une calcification satisfaisante, spécifiquement de la coquille.

L'utilisation d'algues de différentes espèces, pour l'alimentation animale est connue dans l'art antérieur. Ces algues sont en général préconisées comme aliment de complément pour le bétail, pour leur teneur élevée en sels minéraux.

Par exemple, la Demande PCT WO 84/04871 décrit un produit de nutrition dans lequel ries algues lithotaamnes peuvent être utilisées pour assurer un apport calcique.

Toutefois, en ce qui concerne les escargots, l'utilisation d'algues n'avait été envisagée que pour assurer un apport de nourriture fraîche, contenant, outre des sels minéraux, des vitamines et de l'eau (Demande de Brevet Allemand publiée sous le n° 1 607 169).

Les Inventeurs ont maintenant constaté que, de façon surprenante, l'adjonction à un aliment de base pour escargots, d'une préparation d'algues lithothamnes séchées et broyées, accélérait la croissance des animaux.

La présente invention a pour objet l'utilisation pour l'alimentation des escargots, d'un aliment composé comprenant de la farine de céréales et de tourteaux, des sels minéraux, des vitamines, des amino-acides et des oligo-éléments, lequel aliment est caractérisé en ce qu'il contient, en outre, un facteur d'accélération de la croissance desdits animaux, sous forme d'une préparation de lithothamnes broyé et séché.

Selon une modalité d'exécution avantageuse, la préparation de lithothamne mise en oeuvre est une préparation obtenue par séchage puis broyage de lithothamne pêché vivant dans la mer.

Selon une autre modalité d'exécution avantageuse, la préparation de lithothamne mise en oeuvre est une préparation obtenue par séchage puis broyage de lithothamne mort collecté sur les plages à marée basse.

Selon un mode de réalisation avantageux de la présente Invention, ladite préparation de lithothamne est présente dans l'aliment composé à raison de 9 à 17 % en poids par rapport au poids de l'ensemble des autres composants de l'aliment composé.

L'invention a en outre pour objet un procédé d'élevage des escargots, dans lequel les animaux reçoivent une alimentation comprenant de la farine de céréales et de tourteaux, des sels minéraux, des vitamines, des amino-acides et des oligo-éléments, lequel procédé est caractérisé en ce que l'alimentation des animaux comprend en outre une préparation d'algues lithothamnes broyées et séchées.

Selon un mode de mise en oeuvre avantageux du procédé conforme à l'invention l'alimentation des animaux comprend entre 9 et 17 % d'une préparation de lithothamne broyé et séché.

L'Invention sera mieux comprise à l'aide du complément de description qui va suivre, qui se réfère à des exemples de réalisation de l'aliment composé objet de la présente invention.

Compte-Rendu d'Expérimentation.

1) Animaux, matériel d'élevage, paramètres d'environnement et conditionnement.

Des lots expérimentaux identiques sont constitués à partir de jeunes Escargots Helix aspersa maxima tous éclos la même semaine. A l'âge de 1 mois, après une phase de démarrage dite de "nursery", les jeunes sont placés dans des cellules autonettoyantes en matière plastique transparente (Brevet Université de Besançon N° 80/27741 du 29.12.1980 dans sa réalisation dite "type chevron" - conception technique et réalisation par la société de fait Depierre-Noris). La batterie d'élevage constituée par l'ensemble des cellules est placée dans un local où la température est de 24 ± 2°C constants, la photophase de 18 heures de lumière artificielle par jour (tubes fluorescents 40 W type lumière du jour MAZDA) et l'hygrométrie de 90 à 100 %. Le nettoyage, programmé chaque matin, est suivi par la distribution de nourriture. La densitè, au moment du passage des Escargots en cellule d'élevage (début de l'expérience), est de 137 animaux par m$^2$ (soit 100 Escargots pour une cellule).

Les animaux sont pesés globalement 10 jours après le passage en cellules d'élevage, puis à l'âge de 2 mois 1/2. Une pesée individuelle est réalisée à la fin de l'expérience afin d'établir par des histogrammes la répartition des populations par classes de poids. Les animaux sont alors âgés de 3 mois 1/2 ; les premiers Escargots "bordés" apparaissent et l'expérience est arrêtée (le bord de la coquille d'un animal dit "bordé" se retourne et se durcit ; cette modification morphologique indique que l'Escargot a atteint la taille adulte). Des courbes de croissance [ poids = f(temps)] sont établies pour chaque lot. La prise de poids journalière moyenne (Pj) est calculée entre chaque pesée :

$$Pj \frac{P2 - P1}{t}$$

P2 :     Poids moyen en gramme au temps t2

P1 :     poids moyen en gramme au temps t1

t :     temps t2- t1 en jours.

A la fin de l'expérience, la comparaison des poids moyens des différents lots est faite à l'aide du test statistique de Newman et Keuls (P = 0,001).

2) Les types de Nutrition.

a) Répartition des animaux :

7 types de formules alimentaires sont utilisés. Pour chaque type, 3 lots de 100 animaux sont constitués, soit un total de 2100 Escargots pour l'ensemble de l'expérience. La désignation des lots et des types d'aliment font l'objet du Tableau I ci-après :

| Alimentation proposée | Aliment de base | Préparations* d'algues calco-magnésiennes | | | Carbonate de Calcium | AJOUTS Hydroxycarbonate de magnésium | Carbonate de Calcium et Hydroxycarbonate de magnésium |
|---|---|---|---|---|---|---|---|
| | | 16,6 % | 13 % | 9,1 % | | | |
| Désignation des mélanges | | 1 | 2 | 3 | 4 | 5 | 6 |
| Lots  $T_1$ à $T_3$ | + | | | | | | |
| $A_1$ à $A_3$ | + | + | | | | | |
| $B_1$ à $B_3$ | + | | + | | | | |
| $C_1$ à $C_3$ | + | | | + | | | |
| $D_1$ à $D_3$ | + | | | | + | | |
| $E_1$ à $E_3$ | + | | | | | + | |
| $F_1$ à $F_3$ | + | | | | | | + |

\* La préparation d'algues calco-magnésiennes utilisée dans l'expérimentation dont il est présentement rendu compte est le "CALMAGOL"® qui est du lithothamne séché et broyé commercialisé par la Société LEMAIRE.

EP 0 308 329 B1

b) Précisions concernant les mélanges nutritifs réalisés :

Les sept formulations d'aliment testées sont toutes réalisées à partir de l'aliment pour escargots fabriqué par la Société UCAAB, identifié ci-après sous le nom d'"aliment UCAAB", soit utilisé seul (témoin), soit complété par divers ajouts et dont la composition est la suivante :

- Matières protéiques brutes     6 à 20 %
- Matières grasses               1 à 5 %
- Matières cellulosiques         2 à 12 %
- Matières minérales            10 à 40 %
- Calcium                        3 à 15 %
- Phosphore                      1 à 7 %
- Lysine                         0,40 à 0,80 %
- Méthionine                     0,15 à 0,30 %
- Méthionine + Cystine           0,35 à 0,60 %
- Arginine                       0,70 à 1,0 %

– Mélanges 1, 2, 3 : "Calmagol" avec des teneurs de 16,6 %, 13 % et 9,1 % respectivement pour les mélanges 1, 2 et 3.

– mélange 4 : carbonate de calcium (Prolabo - RP Normapur - CaCo$_3$ 99,5 % min) dans des proportions permettant d'obtenir un pourcentage de calcium total identique à celui du mélange 1, la teneur en magnésium total étant la même que celle de l'aliment de base.

– Mélange 5. : hydroxycarbonate de magnésium (Prolabo - RP Normapur - 4 MgCO$_3$, Mg(OH)$_2$, 5 H$_2$O) dans des proportions permettant d'obtenir un pourcentage de magnésium total identique à celui du mélange 1, la teneur en calcium total étant la même que celle de l'aliment de base.

– Mélange 6 : carbonate de calcium et d'hydroxycarbonate de magnésium dans des proportions permettant d'obtenir des pourcentages de calcium et de magnésium totaux identiques à ceux du mélange 1.

Ces données sont récapitulées dans le Tableau II ci-après :

Tableau II : Teneur en calcium et magnésium totaux des
----------   différentes formulations d'aliments.

| Nourriture | Pourcentage de | Calcium total | Magnésium total |
|---|---|---|---|
| Aliment de base | | 7,25 | 0,47 |
| mélange 1 | | 11,5 | 0,95 |
| mélange 2 | | 10,6 | 0,85 |
| mélange 3 | | 9,6 | 0,73 |
| mélange 4 | | 11,5 | 0,47 |
| mélange 5 | | 7,25 | 0,95 |
| mélange 6 | | 11,5 | 0,95 |

3) Analyse des résultats.

3.1. Action comparée des mélanges 1, 2, 3 et de l'aliment témoin sur la croissance :

L'observation des courbes de croissance (cf. Fig. 1 annexée) montre que l'évolution des poids moyens des lots A, B, C, T est semblable jusqu'au 38ème jour de l'expérience. A partir de cette date, les courbes des lots A, B, C divergent de celles des lots T. Pour les lots A, B, C, le 78ème jour de l'expérience est marqué par une accélération de la croissance (8 cas sur 9) qui ne se retrouve pas pour les lots témoins. La comparaison des prises de poids journalières de ces différents lots illustre bien ces diverses dynamiques de croissance, ainsi que cela ressort du Tableau III ci-après :

**Tableau III : Variations de la prise de poids journalière (Pj) au cours du temps.**

| Lot | | Valeur de Pj (gramme/jour) pendant | | |
|---|---|---|---|---|
| | | Phase 1 (27è au 38è jour) | Phase 2 (38è au 78è jour) | Phase 3 (78è au 106è jour) |
| T | 1 | | | |
| | 2 | 0,02 | 0,08 | 0,05 |
| | 3 | | | |
| A | 1 | | | |
| | 2 | 0,019 | 0,14 | 0,21 |
| | 3 | | | |
| B | 1 | | | |
| | 2 | 0,03 | 0,15 | 0,29 |
| | 3 | | | |
| C | 1 | | | |
| | 2 | 0,02 | 0,13 | 0,29 |
| | 3 | | | |
| D | 1 | | | |
| | 2 | 0,018 | 0,1 | 0,04 |
| | 3 | | | |
| E | 1 | | | |
| | 2 | 0,019 | 0,06 | 0,034 |
| | 3 | | | |
| F | 1 | | | |
| | 2 | 0,02 | 0,05 | 0,033 |
| | 3 | | | |

Pendant la phase 1 (27è au 38è jour de l'expérience), la valeur de Pj est peu différente de 0,02 g/j pour les lots A, B, C, T. La phase 2 (38è au 78è jour) se caractérise par une valeur de Pj toujours supérieure à celle de la phase 1, mais cette augmentation est plus forte pour les lots A, B, C (x 7 pour Pj lots A, B, C contre x 4 pour Pj lots T). Quant à la phase 3 (78è au 106è jour), elle est caractérisée par une valeur de Pj inférieure à celle de la phase 2 pour les lots T (- 0,03 g/j), alors qu'elle est nettement supérieure pour les lots A, B, C (+ 0,12 g/j). En fin d'expérience, les poids moyens des lots A, B, C sont très significativement différents de ceux des lots T et les pourcentages d'animaux de poids supérieurs à 10 g sont beaucoup plus importants (en moyenne pour les lots A, B, C sur les 3 essais : 76 % contre 4,2 % pour les lots T) ainsi que cela ressort du Tableau IV ci-après :

**Tableau IV : Croissance de l'Escargot Helix aspersa maxima :**
**---------- bilan pondéral et mortalité à l'âge de 3 mois .**

| Essai | Lot | Poids moyen en grammes à 1 mois | à 3 mois | Pourcentage d'animaux de poids supérieur à 10 g. | Pourcentage de mortalité |
|-------|-----|------|------|------|------|
| 1 | $T_1$ | 0,1 | 4,4 | 0 | 0 |
|   | $A_1$ |     | 10 | 53 | 2 |
|   | $B_1$ |     | 15,1 | 84 | 4 |
|   | $C_1$ |     | 14,4 | 77,8 | 0 |
|   | $D_1$ |     | 5,6 | 5 | 0 |
|   | $E_1$ |     | 4,4 | 0 | 31 |
|   | $F_1$ |     | 3,9 | 0 | 13 |
| 2 | $T_2$ | 0,1 | 5,4 | 4,6 | 14 |
|   | $A_2$ |     | 13,4 | 71 | 10 |
|   | $B_2$ |     | 14,3 | 71,7 | 8 |
|   | $C_2$ |     | 14,5 | 81 | 5 |
|   | $D_2$ |     | 6,3 | 10 | 1 |
|   | $E_2$ |     | 4,3 | 0 | 19 |
|   | $F_2$ |     | 3,7 | 0 | 13 |
| 3 | $T_3$ | 0,1 | 5,8 | 8,1 | 14 |
|   | $A_3$ |     | 14,2 | 87 | 14 |
|   | $B_3$ |     | 16 | 89,5 | 4 |
|   | $C_3$ |     | 13,1 | 71,7 | 8 |
|   | $D_3$ |     | 4,8 | 3,2 | 7 |
|   | $E_3$ |     | 3 | 0 | 14 |
|   | $F_3$ |     | 3,2 | 0 | 18 |

L'observation des histogrammes réalisés en fin d'expérience (lots B choisis à titre de référence) et représentés à la Figure 2 annexée), montre l'étalement de la population vers les classes de poids supérieures à 10 g, ce qui ne se produit pas pour les lots T. De plus, dans ce dernier cas, aucun animal n'est bordé en fin d'expérience (animaux âgés de 3 mois 1/2), alors que les lots A, B, C comptent en moyenne 20 % d'animaux bordés d'un poids moyen de 20 g. La mortalité est faible ; elle varie de 0 à 14 % et ne peut être corrélée avec le type de nourriture ingérée (Tableau IV).

3.2. Action comparée des mélanges 4, 5, 6 et de l'aliment témoin sur la croissance.

Pour les lots D, les poids moyen en fin d'expérience ne sont pas significativement différents de ceux des lots T, bien qu'étant légèrement supérieurs dans 2 cas sur 3. Pour les lots E et F, seul l'essai 3 montre une différence significative avec les animaux du lot T, bien que dans 5 cas sur 6 les poids moyens soient inférieurs à ceux du lot T (cf. Tableau IV).

L'observation des courbes de croissance (cf. Fig. 1) montre que pour l'ensemble des lots D, E, F, T, l'évolution des poids moyens est semblable jusqu'au 38è jour de l'expérience ; aussi, la valeur de Pj (cf. Tableau III) est peu différente pour ces 4 lots pendant la phase 1. Au cours de la phase 2, la valeur de Pj est toujours supérieure à celle de la phase 1, mais cette augmentation est moins sensible pour les lots E et F que pour les lots D et T. Au 78è jour, on enregistre pour l'ensemble des lots D, E, F une diminution du rythme de croissance, comme cela a été noté pour les lots T.

En ce qui concerne les pourcentages d'animaux d'un poids supérieur à 10 g, ils sont très faibles (lot D) ou nuls (lots E et F) (cf. Tableau IV). La répartition de la population par classe de poids pour les lots D est tout à fait comparable à celle des lots T, c'est-à-dire que la majorité des Escargots appartiennent à des classes de poids allant jusqu'à 10 g, alors que pour les lots E et F, la plus grande partie de la population se situe dans des classes de poids inférieures à 6 g (Fig. 2).

En fin d'expérience, le pourcentage d'animaux bordés est nul dans les lots T, E, F et seulement de 1 % pour un des lots D. La mortalité est plus élevée pour les lots E et F (elle varie de 13 à 31 %) que pour les lots T (de 0 à 14 %) (Tableau IV).

### 3.3. Action comparée des mélanges 1, 2, 3 et 4, 5, 6 sur la croissance.

Les poids moyens atteints en fin d'expérience par les lots A, B, C sont toujours très significativement différents de ceux des lots D, E, F (Tableau IV). Le pourcentage d'animaux de poids supérieur à 10 g diffère aussi beaucoup, de 76 % en moyenne pour les lots A, B, C, il tombe à 2 % pour les lots D, E, F. L'observation des histogrammes (Fig. 2) illustre parfaitement ces résultats. Quant aux pourcentages d'animaux bordés en fin d'expérience, ils passent de 20 % pour les lots A, B, C à seulement 0,1 % pour les lots D, E, F.

Les résultats obtenus, dont il est rendu compte dans ce qui précède, mettent en évidence l'action stimulatrice de l'algue Lithothamnium calcareum broyée et séchée ("Calmagol") sur la croissance d'Helix aspersa maxima : les poids moyens atteints en fin d'expérience par les animaux disposant d'aliment de base additionné de "Calmagol"sont, en moyenne pour les 3 essais, toutes doses confondues, 2,7 fois plus élevés que ceux d'animaux nourris avec l'aliment de base. L'effet bénéfique de l'ajout de "Calmagol", déjà sensible au 38è jour de l'expérience, s'amplifie encore au 78è jour. Il ne semble pas exister de relation entre le pourcentage de "Calmagol" ajouté à l'aliment de base et l'effet sur la croissance car les résultats sont très proches les uns des autres dans les 3 cas.

L'utilisation du mélangé aliment de base plus "Calmagol" (quelle que soit la proportion de "Calmagol" additionnée) permet également d'obtenir en moyenne 20 % d'animaux bordés de poids moyen égal à 20 g dès l'âge de 3 mois 1/2 (contre 0 % pour l'aliment de base) et un pourcentage de 76 % d'animaux de poids supérieur à 10 g (contre 4,2 % pour l'aliment de base).

WAAGE [J. Exp. Zool. (1952), 120, 311-342] ayant observé que le calcium est mieux absorbé sous forme de carbonate que sous forme de phosphate chez Helix aspersa et CROWELL [Proc. Malac. Soc. Lond. (1973), 40, 491-503] ayant montré, chez la même espèce, l'effet bénéfique sur la croissance d'un ajout de carbonate de calcium à des feuilles de laitue, les Inventeurs ont vérifié si la richesse en carbonate de calcium du "Calmagol" pourrait être responsable de son action positive sur la croissance. Les résultats obtenus avec le mélange 4 (UCAAB additionné de $CaCO_3$, ayant le même pourcentage de Ca total que le mélange UCAAB-"Calmagol" 16,6 %) infirment cette hypothèse car ce mélange ne permet pas d'obtenir une meilleure croissance des Escargots. Ceci se répète parfaitement pour les 3 essais. Il semble donc que la teneur en calcium de l'aliment de base ne soit pas le facteur limitant de la croissance.

L'ajout de "Calmagol" permet, en outre, d'enrichir l'alimentation en magnésium (essentiellement sous la forme de carbonate) (cf. Tableau IV ci-dessus). Cet enrichissement en magnésium (sous forme d'hydroxycarbonate de Mg) ne semble pas non plus être responsable de l'action stimulante du "Calmagol" sur la croissance car les résultats obtenus avec le mélange 5 ne sont pas meilleurs que ceux obtenus avec l'aliment de base seul.

La combinaison UCAAB + carbonate de calcium + hydroxycarbonate de magnésium ne provoque pas non plus la stimulation de la croissance.

L'apport de calcium et/ou de magnésium sous les formes indiquées plus haut ne permet donc pas de reproduire l'action stimulatrice de la préparation de lithothamne sur la croissance, ce qui est en faveur de la présence dans cette préparation d'un facteur de stimulation de la croissance.

une expérimentation réalisée dans des conditions similaires sur des Escargots de Bourgogne permet d'obtenir, en moins d'un an, des escargots de taille adulte (contre 2 à 3 ans dans la nature), ce qui constitue un succès considérable car l'élevage de cette espèce n'avait pas pu jusqu'alors être réalisé en captivité.

**Revendications**

1. Utilisation pour l'alimentation des escargots, d'un aliment composé comprenant de la farine de céréales et de tourteaux, des sels minéraux, des vitamines, des aminoacides et des oligo-éléments, lequel aliment est caractérisé en ce qu'il contient, en outre, un facteur d'accélération de la croissance desdits animaux, sous forme d'une préparation de lithothamne broyé et séché.

2. Utilisation selon la revendication 1, caractérisée en ce que la préparation de lithothamne mise en oeuvre est une préparation obtenue par séchage puis broyage de lithothamne pêché vivant dans la mer.

3. Utilisation selon la revendication 1, caractérisée en ce que la préparation de lithothamne mise en oeuvre est une préparation obtenue par séchage puis broyage de lithothamne mort collecté sur les plages à marée basse.

4. Utilisation selon l'une quelconque des revendications 1 à 3, caractérisée en ce que ladite préparation de lithothamnes est présente dans l'aliment composé à raison de 9 à 17 % en poids par rapport au poids de l'ensemble des autres composants de l'aliment composé.

5. Procédé d'élevage des escargots, dans lequel les animaux reçoivent une alimentation comprenant de la farine de céréales et de tourteaux, des sels minéraux, des vitamines, des amino-acides et des oligo-éléments, lequel procédé est caractérisé en ce que l'alimentation des animaux comprend en outre une préparation de lithothamne broyée et séché.

6. Procédé selon la revendication 5, caractérisé en ce que l'alimentation des animaux comprend entre 9 et 17% d'une préparation de lithothamne broyé et séché.


**Patentansprüche**

1. Verwendung eines Nahrungsmittels zur Ernährung von Schnecken, bestehend aus Getreide- und Krabbenmehl, Mineralsalzen, Vitaminen, Aminosäuren und Spurenelementen, dadurch gekennzeichnet, daß das Nahrungsmittel des weiteren einen Wachstumsbeschleuniger für die genannten Tiere in Form eines Präparates aus zermahlenem und getrocknetem Lithotham enthält.

2. Verwendung nach Anspruch 1, dadurch gekennzeichnet, daß das verwendete Lithotham-Präparat durch Trocknen und durch Zermahlen von Lithotham gewonnen ist, welches lebend aus dem Meer gefischt wurde.

3. Verwendung gemäß Anspruch 1, dadurch gekennzeichnet, daß das eingesetzte Lithotham-Präparat durch Trocknen und anschließendem Zermahlen von abgestorbenem Lithotham gewonnen ist, welches auf den Stränden bei Ebbe eingesammelt worden ist.

4. Verwendung nach einem der Patentansprüche 1 bis 3, dadurch gekennzeichnet, daß das genannte Lithotham-Präparat in der Nahrung zwischen 9 bis 17 Gewichtsprozent enthalten ist, bezogen auf das Gesamtgewicht der anderen Inhaltsstoffe des zusammengesetzten Nahrungsmittels.

5. Verfahren zur Aufzucht von Schnecken, bei welchem die Tiere ein Nahrungsmittel erhalten, das aus Getreide- und Krabbenmehl, Mineralsalzen, Vitaminen, Aminosäuren und Spurenelementen besteht, dadurch gekennzeichnet, daß dem Tier-Nahrungsmittel des weiteren ein zermahlenes und getrocknetes Lithotham-Präparat zugefügt wird.

6. Verfahren nach Anspruch 5,-dadurch gekennzeichnet, daß das Tier-Nahrungsmittel zwischen 9 und 17 % des zermahlenen und getrockneten Lithotham-Präparats enthält.


**Claims**

1. Use for the feeding of snails, of a compound feed comprising cereal and oilcake meals, mineral salts, vitamins, amino acids and trace elements, which feed is characterised in that it contains in addition a factor accelerating the growth of the said animals in the form of a ground and dried lithothamnion preparation.

2. Use according to Claim 1, characterised in that the lithothamnion preparation used is a preparation obtained by drying and then grinding of lithothamnion fished live from the sea.

3. Use according to Claim 1, characterised in that the lithothamnion preparation used is a preparation obtained by drying and then grinding of dead lithothamnion collected on beaches at low tide.

4. Use according to any one of Claims 1 to 3, characterised in that the said lithothamnion preparation is present in the compound feed in an amount of 9 to 17% by weight relative to the weight of all the other components of the compound feed.

5. Method of farming snails, in which the animals receive a feed comprising cereal and oilcake meals, mineral salts, vitamins, amino acids and trace elements, which method is characterised in that the animal feed comprises in addition a ground and dried lithothamnion preparation.

6. Method according to Claim 5, characterised in that the animal feed comprises between 9 and 17% of a ground and dried lithothamnion preparation.